# FASCICULE DE BREVET EUROPEEN

(11) **EP 4 217 712 B1**
(45) Date de publication et mention de la délivrance du brevet: **06.11.2024**
(21) Numéro de dépôt: 21798062.2
(22) Date de dépôt: 23.09.2021
(51) Int. Cl.: G01N 21/45, G01N 21/82, G01N 15/14, G01N 15/1429, G01N 15/1433, G01N 15/1434, C12M 1/34, G01N 15/02

(54) **PROCEDE D'ANALYSE D'UN ECHANTILLON BIOLOGIQUE AVEC MASQUAGE D'ARTEFACTS**
VERFAHREN ZUR ANALYSE EINER BIOLOGISCHEN PROBE MIT ARTEFAKTMASKIERUNG
METHOD FOR ANALYSING A BIOLOGICAL SAMPLE WITH ARTEFACT MASKING

(30) Priorité: 25.09.2020 FR 2009775
(43) Date de publication de la demande: 02.08.2023
(73) Titulaire: bioMérieux, 69280 Marcy l'Etoile (FR)
(72) Inventeur: DECAUX, Dominique, 69630 CHAPONOST (FR); BISCEGLIA, Emilie, 69890 La Tour De Salvagny (FR); PERRIN, Guillaume, 69160 TASSIN LA DEMI-LUNE (FR); BARLAS, Philippine, 38500 LA BUISSE (FR); COLLIGNON, Emilie, 01800 MEXIMIEUX (FR)
(74) Mandataire: bioMérieux PI Groupement mandataires
(86) Numéro de dépôt international: PCT/FR2021/051633
(87) Numéro de publication internationale: WO 2022/064145

(56) Documents cités:
- WO-A1-2019/135060
- US-A- 5 566 249
- US-A1- 2018 052 425

## Description

### Domaine technique

La présente invention se rapporte au domaine de l'analyse d'échantillons biologiques par imagerie, et plus particulièrement concerne le masquage d'artefacts pouvant être présent sur une image, lors de la détermination d'un paramètre de biomasse représentatif de la répartition spatiale quantitative d'agents biologiques dans un échantillon biologique à des fins d'analyse dudit échantillon biologique.

### Arrière-plan technologique

L'analyse d'échantillons biologiques par imagerie fait appel à un instrument d'analyse optique dans lequel sont introduits les échantillons biologiques à analyser. Un échantillon biologique est constitué par une suspension d'agents biologiques. Les agents biologiques sont par exemple des micro-organismes (bactéries, levures, moisissures, etc.). L'analyse d'un agent biologique dans l'échantillon biologique peut comprendre l'identification dudit agent biologique ou la détermination d'une caractéristique de cet agent biologique, comme par exemple la concentration minimale inhibitrice d'un antibiotique qui serait efficace à l'encontre dudit agent biologique.

L'échantillon biologique, appelé inoculum dans son état initial est disposé dans un réceptacle, ou puits, au moins partiellement transparent à travers lequel l'instrument d'analyse peut procéder à des mesures de propriétés optiques de l'échantillon biologique. Le puits contient un milieu nutritif et également un ou plusieurs réactifs, tels qu'un substrat enzymatique ou des antibiotiques, destinés à permettre l'analyse des agents biologiques présents dans l'échantillon biologique par leurs éventuelles interactions avec ceux-ci. Généralement, une pluralité de puits sont prévus pour recevoir chacun de l'inoculum, chacun des puits étant muni de réactifs différents ou d'un même réactif à des concentrations différentes. En fonction de la nature des agents biologiques présents dans l'inoculum, ceux-ci réagissent avec certains réactifs, et pas avec d'autres réactifs, ou à certaines concentrations et pas à d'autres. Par exemple, dans le cadre d'un antibiogramme pour tester les sensibilités aux antibiotiques, les réactifs sont constitués de différents antibiotiques à différentes concentrations, et les agents biologiques vont se multiplier dans les puits contenant les antibiotiques auxquels ils ne sont pas sensibles ou dans lesquels la concentration en antibiotiques est insuffisante, ou verront au contraire leur développement plus ou moins entravés dans les puits contenant les antibiotiques auxquels ils sont sensibles à des concentrations suffisantes.

Ces différences d'interactions entre les agents biologiques et les réactifs se traduisent donc par des évolutions différentes de la biomasse dans les puits. La biomasse, c'est-à-dire la quantité de matière biologique présente dans chaque puits, influe directement les propriétés optiques de l'échantillon biologique présent dans chaque puits, puisque les agents biologiques présentent eux-mêmes des propriétés optiques différentes de la solution dans laquelle ils sont en suspension.

En particulier, la transmittance de l'échantillon biologique est affectée par l'évolution de la concentration en agents biologiques. Pour cette raison, il avait été développé des procédés d'analyse d'échantillons biologiques basé sur la détermination de l'évolution au cours du temps, lors d'une phase d'incubation, de la transmittance globale (ou absorbance, ce qui est équivalent) d'un puits rempli de l'échantillon biologique, afin d'en déterminer une mesure de turbidité, exprimée typiquement en McFarland (McF). Cette mesure de turbidité est directement représentative de la biomasse d'agents biologiques dans l'échantillon biologique. Pour ce faire, une diode émettrice éclaire l'échantillon avec un faisceau lumineux d'intensité connue, et une photodiode ponctuelle disposée à l'opposé de la diode émettrice par rapport à l'échantillon permet de déterminer l'intensité lumineuse reçue après que le faisceau lumineux ait traversé l'échantillon biologique. Toutefois, une telle mesure en transmittance présente une sensibilité assez faible, de sorte qu'il n'est pas possible de mesurer une turbidité inférieure à 0,05 McF, voire inférieure à 0,1 McF. En outre, la biomasse ne permet pas toujours de déterminer la concentration d'agents biologiques : en cas d'augmentation du volume des agents biologiques, par exemple par élongation pour des bactéries, la biomasse augmente pour un même nombre d'agents biologiques.

De fait, il s'agit d'une mesure globale, qui ne tient pas compte de la répartition spatiale des agents biologiques à l'intérieur du réceptacle d'analyse, ni d'éventuels artefacts pouvant affecter les mesures effectuées. De tels artefacts peuvent avoir des origines variées. Par exemple, la présence de bulles d'air dans le réceptacle d'analyse ou des plissures du film fermant le réceptacle d'analyse peuvent fortement altérer la propagation des ondes lumineuse, et donc altérer les mesures optiques. Les artefacts peuvent également provenir d'éléments étrangers à l'échantillon biologique, c'est-à-dire différent des agents biologiques et de la solution saline, et présents dans le réceptacle d'analyse, comme par exemple des poussières extérieures, des cristaux de nutriments utilisés pour la croissance bactérienne, des réactifs non dissous dans la solution saline, etc. Ces éléments étrangers peuvent absorber une partie des rayons lumineux, et donc également altérer les mesures de transmittance.

Le brevet US 5,566,249 A propose un procédé de détection de bulles dans une image acquise par un microscope. Une image en niveaux de gris est filtrée binominalement, puis l'image en niveaux de gris est soustraite à l'image filtrée. Une détection de contour est mise en oeuvre pour détecter les contours des bulles d'air, le système remplissant les contours ainsi détectés pour cartographier la présence des bulles. Toutefois, ce système n'est pas adapté aux images holographiques, mais uniquement aux images acquises par un microscope dans lesquelles les bulles apparaissent comme des contours. En outre, ce procédé ne permet pas de mettre en évidence d'autres artefacts que les bulles d'air.

Le document US 2018/052425 A1 divulgue un procédé d'analyse d'un échantillon biologique comprenant une acquisition d'une image holographique de l'échantillon biologique et une détermination à partir de l'image holographique acquise des pixels de l'image holographique ayant une valeur d'intensité de phase supérieure à au moins un seuil prédéterminé de manière à identifier les coordonnées spatiales d'artefacts et à les masquer du champ optique d'illumination à l'aide d'une fonction sigmoïde, permettant de recalculer l'image holographique en l'absence des artefacts.

Le document US 5 566 249 A divulgue un procédé d'analyse d'un échantillon biologique comprenant une acquisition d'une image de l'échantillon biologique et une détermination d'un masque d'image obtenu par une détection de contour de particules identifiées dans l'image qui est basée sur une mesure de contraste utilisant la comparaison d'une variation d'intensité des pixels associés à la frontière de la particule pour déterminer si la particule est un artefact à masquer ou non.

Le document WO 2019/135060 A1 divulgue un procédé d'analyse d'un échantillon biologique comprenant une acquisition d'une image holographique de l'échantillon biologique et utilise des variations de paramètres statistiques dans la distribution des niveaux de gris dans l'image holographique pour identifier des artefacts dans l'image.

### Présentation de l'invention

L'invention vise donc à permettre, lors de l'analyse d'un échantillon biologique, de déterminer une valeur d'un paramètre de biomasse des agents biologiques présents dans l'échantillon biologique, sans altération de la mesure par d'éventuels artefacts résultant de la présence d'éléments étrangers tels que des bulles d'air.

A cet effet, l'invention propose un procédé d'analyse d'un échantillon biologique au moyen d'un instrument d'analyse, l'échantillon biologique comprenant des agents biologiques et étant disposé dans un réceptacle d'analyse dans un champ de vue d'un système d'imagerie holographique, le procédé comprenant :
- une acquisition d'une image holographique de l'échantillon biologique à un instant de mesure, l'image holographique associant une valeur d'intensité pour chaque pixel de ladite image holographique, les valeurs d'intensité étant comprises dans une plage d'intensité s'étendant entre une valeur minimale d'intensité et une valeur maximale d'intensité, caractérisé par
- une détermination à partir de l'image holographique acquise, d'un masque d'image associant un état actif ou inactif à chaque pixel de l'image holographique en fonction des valeurs d'intensité des pixels de l'image holographique, de sorte qu'un état inactif soit associé à des pixels de l'image holographique correspondant à des artefacts causés par des éléments présents dans le champ de vue autres que des agents biologiques, le masque d'image étant déterminé de sorte que l'état inactif est associé au moins à des pixels d'un ensemble connexe de pixels présentant des valeurs d'intensité dans une plage de masquage constituant un sous-ensemble de la plage d'intensité, ladite plage de masquage étant délimitée par au moins un seuil de masquage, et la détermination du masque d'image comprend la comparaison de valeurs d'intensité des pixels de l'image holographique avec l'au moins un seuil de masquage et l'association à chaque pixel d'une première valeur de masque traduisant l'état inactif dudit pixel ou d'une seconde valeur de masque traduisant l'état actif dudit pixel en fonction du résultat de la comparaison,
- une détermination d'une valeur d'au moins un paramètre de biomasse représentatif de la répartition spatiale quantitative d'agents biologiques dans le champ de vue, à partir des seuls pixels de l'image holographique présentant un état actif défini par le masque d'image, et
- une fourniture de ladite valeur du paramètre de biomasse parmi les résultats d'analyse.

Grâce au masque d'image, les pixels de l'image holographique correspondant à des artefacts causés par des éléments présents dans le champ de vue autres que des agents biologiques ne sont pas pris en compte dans l'analyse ultérieure de l'image holographique, ce qui permet d'améliorer sensiblement la qualité de cette analyse et la rend plus robuste aux éléments étrangers tels que les bulles d'air dans le réceptacle d'analyse.

L'invention est avantageusement complétée par les différentes caractéristiques suivantes prises seules ou selon leurs différentes combinaisons possibles :
- les valeurs d'intensité sont comprises dans une plage d'intensité s'étendant entre une valeur minimale d'intensité et une valeur maximale d'intensité, et un seuil de masquage bas correspond à une valeur comprise entre 5% et 25% de l'étendue de la plage d'intensité, et de préférence entre 10% et 20% de l'étendue de la plage d'intensité ;
- les valeurs d'intensité sont comprises dans une plage d'intensité s'étendant entre une valeur minimale d'intensité et une valeur maximale d'intensité, et un seuil de masquage haut correspond à une valeur comprise entre 75% et 95% de l'étendue de la plage d'intensité, et de préférence entre 80% et 90% de l'étendue de la plage d'intensité ;
- l'état d'un pixel du masque est déterminé par la valeur d'intensité dudit pixel par rapport à au moins un seuil de masquage ;
- la détermination du masque d'image prend en compte des critères de taille ou de forme d'ensembles connexes de pixels présentant des valeurs d'intensité dans la plage de masquage pour affecter un état actif ou inactif aux pixels desdits ensembles de pixels et/ou prend en compte des critères de taille ou de forme d'ensembles connexes de pixels présentant des états actifs ou inactifs similaires pour modifier un état actif ou inactif aux pixels desdits ensembles de pixels ;
- la détermination du masque d'image comprend la mise en oeuvre d'une morphologie mathématique, et en particulier une dilatation morphologique est appliquée au masque d'image, suivie d'une érosion morphologique ;
- la détermination du masque d'image comprend l'utilisation d'un réseau de neurone préalablement configuré pour associer un état inactif à des pixels de l'image holographique correspondant à des artefacts causés par des éléments présents dans le champ de vue autres que des agents biologiques ;
- la valeur du paramètre de biomasse est dérivé d'un nombre d'agents biologiques apparaissant dans les pixels actifs de l'image holographique ;
- la détermination de la valeur du paramètre de biomasse comprend la détermination, pour chacune d'une pluralité de zones de pixels actifs de l'image holographique, de la présence ou non d'agents biologiques dans ladite zone de pixels actifs ;
- la présence ou non d'agents biologiques dans une zone de pixels actifs est déterminée en comparant une valeur de niveau de gris de la zone avec un seuil, ou en comparant un motif de la zone avec des motifs de référence d'une base de données ;
- le masque d'image associe un état actif à au moins 25% des pixels de l'image holographique, et de préférence à au moins 35% des pixels de l'image holographique.

L'invention concerne également un Instrument d'analyse comprenant un système holographique avec un champ de vue configuré pour acquérir une image holographique et des moyens de traitement de données, l'instrument d'analyse étant configuré pour recevoir un échantillon biologique dans un réceptacle d'analyse dans le champ de vue du système holographique et pour mettre en oeuvre les étapes du procédé d'analyse selon l'invention.

### Présentation des figures

D'autres caractéristiques, buts et avantages de l'invention ressortiront de la description qui suit, qui est purement illustrative et non limitative, et qui doit être lue en regard des dessins annexés sur lesquels :
- la figure 1 montre un exemple de carte d'analyse comportant une pluralité de réceptacles sous forme de puits pouvant être utilisée pour la mise en place d'un échantillon biologique à analyser, selon un mode de réalisation possible de l'invention ;
- la figure 2 montre schématiquement un exemple de système d'imagerie holographique pouvant être utilisé dans un instrument d'analyse selon un mode de réalisation possible de l'invention ;
- la figure 3 est un diagramme illustrant des étapes du procédé d'analyse selon un mode de réalisation possible de l'invention ;
- la figure 4 est un exemple d'une image holographique dans laquelle apparaissent des bulles présentes dans le réceptacle d'analyse ;
- la figure 5 est un exemple de masque d'image déterminé à partir de l'image holographique de la figure 4 ;
- la figure 6 montre le résultat de l'application d'une dilatation morphologique suivie d'une érosion morphologique appliquée sur le masque d'image de la figure 5 ;
- la figure 7 montre le résultat de l'application du masque d'image de la figure 6 à l'image holographique de la figure 4 ;
- la figure 8 montre un détail de la figure 7 pour illustrer un ensemble de pixels actifs dans lequel sont recherchés les agents biologiques.

### Description détaillée

Le procédé d'analyse d'un échantillon biologique est mené au moyen d'un instrument d'analyse comprenant un système d'imagerie holographique avec un champ de vue, l'instrument d'analyse étant configuré pour recevoir un échantillon biologique dans un réceptacle d'analyse dans le champ de vue du système d'imagerie holographique.

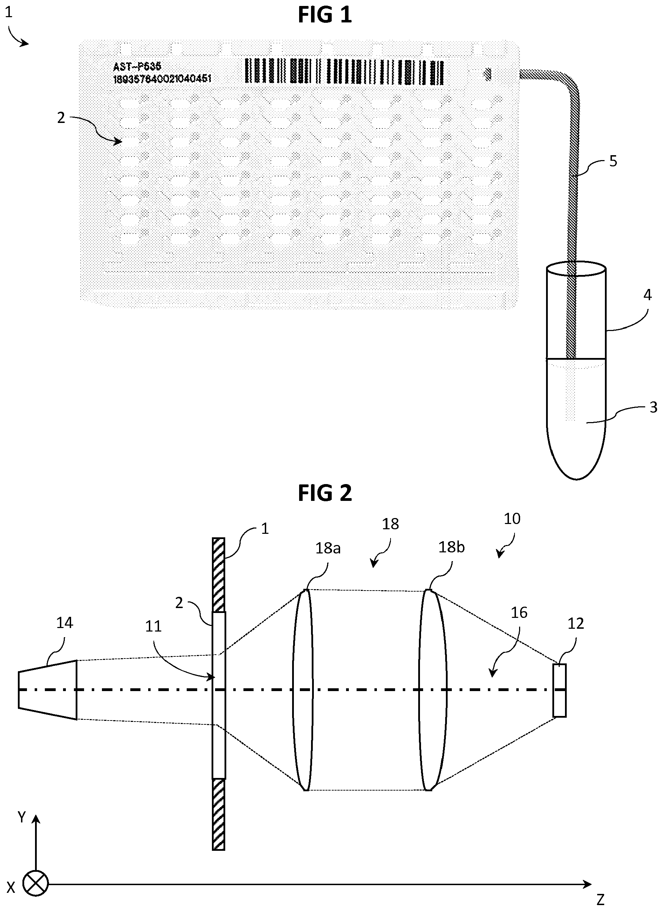

La **figure 1** montre un exemple de carte d'analyse 1 comportant une pluralité de réceptacles d'analyse 2 sous forme de puits pouvant être utilisée pour la mise en place d'un échantillon biologique à analyser. Les réceptacles d'analyse 2 sont ici organisés selon un réseau bidimensionnel sur un plan, chaque réceptacle 2 étant associé à des conditions d'analyse différentes, typiquement au moyen de réactifs différents présents dans les réceptacles d'analyse 2. Par exemple, dans le cadre d'un antibiogramme pour tester les sensibilités aux antibiotiques, les réactifs sont constitués de différents antibiotiques à différentes concentrations. L'utilisation d'une carte d'analyse 1 n'est pas requise, mais une telle carte d'analyse 1 permet de procéder pendant une même durée d'analyse à une pluralité de test de façon standardisée.

Chaque réceptacle d'analyse 2 est au moins partiellement transparent à au moins une longueur d'onde de lumière, visible ou non, et de préférence est au moins partiellement transparent pour le spectre visible. Cette transparence permet l'analyse de l'échantillon biologique qui y est contenu par des moyens optiques tels que le système d'imagerie holographique. De préférence, un réceptacle d'analyse 2 présente au moins deux faces transparentes opposées, de sorte à présenter un axe transparent pour la propagation de la lumière. Ces deux faces transparentes opposées sont par exemple distantes de moins 1 0 mm, et de préférence de moins de 5 mm. Typiquement, les faces transparentes opposées sont des films transparents définissant le réceptacle d'analyse 2. Il est courant que les réactifs soient fixés sur au moins une des faces transparentes. Les réactifs peuvent ainsi être introduits dans le réceptacle d'analyse 2 en les disposant sur le film destiné à former une face transparente, avant que celui-ci soit appliqué sur la carte d'analyse 1.

Afin de permettre le remplissage des réceptacles d'analyse 2, une telle carte d'analyse 1 peut par exemple comporter un conduit 5 destiné à être plongé dans un volume 3 d'inoculum 3 préparé dans un tube 4. L'inoculum est préparé par un opérateur qui introduit des agents biologiques, par exemple prélevés d'une culture dans une boîte de Petri au moyen d'un tige ou d'un écouvillon, en suspension dans une solution saline, avec une dilution correspondant à une plage déterminée de turbidité, par exemple entre 0,5 et 0,63 McF pour des bactéries en tant qu'agents biologiques ou encore entre 1,8 et 2,2 McF pour des levures en tant qu'agents biologiques, la plage dépendant du type d'analyse effectuée et de l'instrument de mesure. Cette suspension préalable est ensuite diluée encore, par exemple avec un facteur 20, voire 100, pour analyser des bactéries Gram- ou avec un facteur 10, voire 100, pour analyser des bactéries Gram+. Cette dilution ultérieure peut notamment être automatisée, et donc être effectuée par l'instrument de mesure après la mise en place du tube 4 dans l'instrument d'analyse. Bien entendu d'autres plages déterminées de turbidité peuvent être utilisées, en fonction des protocoles utilisés. La dilution désirée peut être obtenue en une fois, ou comme dans l'exemple ci-dessus, en plusieurs fois.

Une extrémité du conduit 5 est alors plongée dans le volume 3 d'inoculum résultant de la préparation dans le tube 4, et l'ensemble est introduit dans l'instrument d'analyse. Bien entendu, tout ou partie de ces étapes de préparation peuvent être automatisées. L'inoculum voyage à travers le conduit 5, puis par un circuit de circulation fluidique ménagé dans la carte d'analyse 1, se répartit entre les réceptacles d'analyse 5. Ce déplacement de l'inoculum dans le conduit 5 et la carte d'analyse 1 peut être causé par capillarité et/ou par une dépressurisation de l'air présent à l'extrémité ouverte du tube 4. Par exemple avec la dépressurisation, l'air présent dans la carte d'analyse 1, qui est à pression atmosphérique, sort de la carte d'analyse 1 par le tube 5 à travers l'inoculum 3 et laisse sa place à l'inoculum 3 qui remonte ainsi par le tube 5 dans la carte d'analyse 1. A l'inverse, il est possible de procéder à une application d'une pression d'air s'exerçant sur l'inoculum par l'intermédiaire de l'extrémité ouverte du tube 4 pour provoquer la remontée du tube 5 par l'inoculum 3. L'échantillon biologique constitué par l'inoculum est alors en place dans un réceptacle d'analyse 2.

L'instrument d'analyse comprend un système d'imagerie holographique avec un champ de vue configuré pour acquérir une image holographique de ce champ de vue. L'acquisition d'une image holographique permet une profondeur de champ importante, et donc une très bonne sensibilité de détection des agents biologiques. Lors de l'acquisition d'une image holographique, le système d'imagerie holographique est placé face à un réceptacle d'analyse 2. A titre d'exemple non limitatif, la **figure 2** représente schématiquement un système d'imagerie holographique 10 en ligne disposé de sorte que le champ de vue 11 dudit système d'imagerie holographique 10 se trouve contenu dans le volume d'échantillon biologique contenu dans un réceptacle d'analyse 2. La carte d'analyse 1, et donc les réceptacles d'analyse 2 qu'elle comprend, est placée dans un plan objet du système d'imagerie holographique 10. Le système d'imagerie holographique 10 définit un axe d'imagerie 16, simplifié ici par une droite correspondant à l'axe optique mais qui peut consister en un ensemble de droites successives définissant le trajet lumineux, en fonction de la configuration des composants optiques du système d'imagerie holographique 10.

D'un côté du réceptacle d'analyse 2, ici sur l'axe optique 16, se trouve une source lumineuse 14 configurée pour illuminer le réceptacle d'analyse 2 dans le champ de vue (ou « field-of-view ») du système d'imagerie holographique 10 au moyen d'un faisceau d'illumination de lumière suffisamment cohérente. La source lumineuse 14 peut produire la lumière d'illumination, ou être simplement la terminaison d'une fibre optique acheminant cette lumière d'illumination, éventuellement pourvue d'un diaphragme ou iris. Le faisceau d'illumination présente les caractéristiques conventionnelles pour l'imagerie holographique, sans contraintes additionnelle particulière. Le faisceau d'illumination peut ainsi être monochromatique (par exemple avec une longueur d'onde autour de 640-670 nm) ou possiblement être composé de plusieurs longueurs d'onde, par exemple utilisées l'une après l'autre.

De l'autre côté du réceptacle d'analyse 2, ici sur l'axe optique 16, se trouve un capteur d'image 12, qui est un capteur numérique comme par exemple un capteur CMOS ou CCD. Le capteur d'image 12 est placé sur un plan image du système d'imagerie holographique 10, et est configuré pour acquérir un hologramme, c'est-à-dire une distribution spatiale d'intensité des interférences causées par des interactions entre l'inoculum placé dans le champ de vue 11 le faisceau d'illumination.

Le système d'imagerie holographique 10 est ici muni d'un ensemble d'organes optiques 18 disposés entre le réceptacle d'analyse 2 et le capteur d'image numérique 12 comme par exemple un objectif de microscope 18a, et une lentille de tube 18b, dans l'exemple illustré. Un organe optique tel que l'objectif de microscope 18 est cependant optionnel, l'invention n'étant pas limitée à la microscopie holographique avec lentille. L'arrangement décrit ici est bien entendu un exemple non limitatif. Tout système d'imagerie holographique 10 peut être utilisé, avec différents organes optiques (avec ou sans objectif de microscope, etc.). Ainsi, dès lors qu'un système d'imagerie holographique 10 peut acquérir une image dans laquelle apparaissent les motifs d'interférence générées par l'échantillon biologique, ce système d'imagerie holographique convient à la mise en oeuvre du procédé. De préférence toutefois, le système d'imagerie holographique 10 est configuré pour définir une profondeur de champ d'au moins 100 µm de profondeur dans la direction de l'axe optique 16 autour de chaque plan focal d'acquisition 20, et de préférence d'au moins 150 µm, et de préférence encore d'au moins 250 µm. Typiquement, le réceptacle d'analyse 2 comprend deux faces transparentes opposées organisées le long de l'axe optique 16, et la profondeur de champ s'étend sur au moins 100 µm entre les deux faces transparentes opposées du réceptacle d'analyse, et de préférence sur au moins 150 µm, et de préférence encore sur au moins 250 µm. Le champ de vue 11 s'entend comme étant l'espace dans lequel la présence d'agents biologiques peut être déterminée à partir d'un hologramme imageant ledit champ de vue 11.

L'instrument de mesure comprend également des composants permettant de traiter des données, tel qu'un processeur, une mémoire, des bus de communication, etc. Dans la mesure où ces autres composants ne sont spécifiques que par le procédé qu'ils mettent en oeuvre et par les instructions qu'ils contiennent, ils ne seront pas détaillés dans la suite.

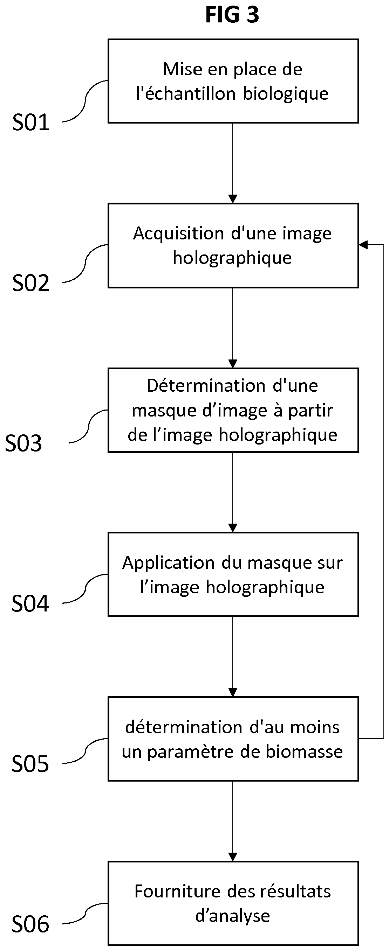

La **figure 3** est un diagramme illustrant des étapes du procédé d'analyse, qui font suite à une mise en place (étape S 1) préalable de l'échantillon biologique dans un réceptacle d'analyse 2 dans le champ de vue 11 du système d'imagerie holographique 10, détaillée plus haut.

Chaque cycle de mesure comprend une acquisition (étape S02) d'une image holographique de l'échantillon biologique à un instant de mesure.

Lors de l'acquisition d'une image holographique, le système d'imagerie holographique acquiert un hologramme, ce qui présente l'avantage d'offrir une grande profondeur de champ, et donc une grande sensibilité de détection des agents biologiques dans l'échantillon biologique. Lors de l'acquisition d'un hologramme, la source lumineuse 14 émet un faisceau d'illumination de référence, qui peut être traduite par une onde plane de référence se propageant dans la direction Z le long de l'axe d'imagerie 16. Les agents biologiques présents dans le champ de vue 11 à l'intérieur du réceptacle d'analyse 2, par leurs propriétés de diffraction, diffusent la lumière de référence incidente. L'onde diffusée par les agents biologiques et l'onde de référence interfèrent sur le capteur d'image 12 pour former l'hologramme. Puisqu'un capteur d'image 12 numérique n'est sensible qu'à l'intensité du champ électromagnétique, l'hologramme correspond à la distribution spatiale d'intensité du champ total correspondant à l'addition de l'onde diffusée et de l'onde de référence, qui est traduite par une valeur de niveau de gris pour chaque pixel. L'image holographique exploitée peut être l'hologramme ou peut être une image reconstruite par calcul de rétropropagation à partir de l'hologramme, en utilisant un algorithme de propagation par exemple basé sur la théorie de la diffraction de Rayleigh Sommerfeld. De même que l'hologramme, une telle image reconstruite est définie par des niveaux de gris pour chaque pixel. Utiliser l'hologramme sans reconstruction permet de bénéficier d'une grande sensibilité de détection, car chaque agent biologique apparaît dans l'hologramme entouré d'anneaux correspondant aux figures d'interférences causées par la présence desdits agents biologiques, facilitant d'autant la détection de la présence de ces agents biologiques. En outre, la non-reconstruction permet un gain de temps et de ressource de calcul. Toutefois, utiliser une image reconstruite présente d'autres avantages, comme celui de permettre de localiser précisément, possiblement en trois dimensions, les agents biologiques apparaissant dans l'image reconstruite.

Dans tous les cas, l'image holographique associe une valeur d'intensité pour chaque pixel de ladite image holographique. Ces valeurs d'intensité sont comprises dans une plage d'intensité s'étendant entre une valeur minimale d'intensité et une valeur maximale d'intensité. La valeur d'intensité est typiquement une valeur de niveau de gris. Lorsque le niveau de gris est codé sur 8 bits, les valeurs d'intensité peuvent prendre les nombres entiers entre la valeur minimale d'intensité 0, qui correspond au noir, et valeur maximale d'intensité 255, qui correspond au blanc. Bien entendu, d'autres codages des valeurs d'intensité peuvent être utilisés.

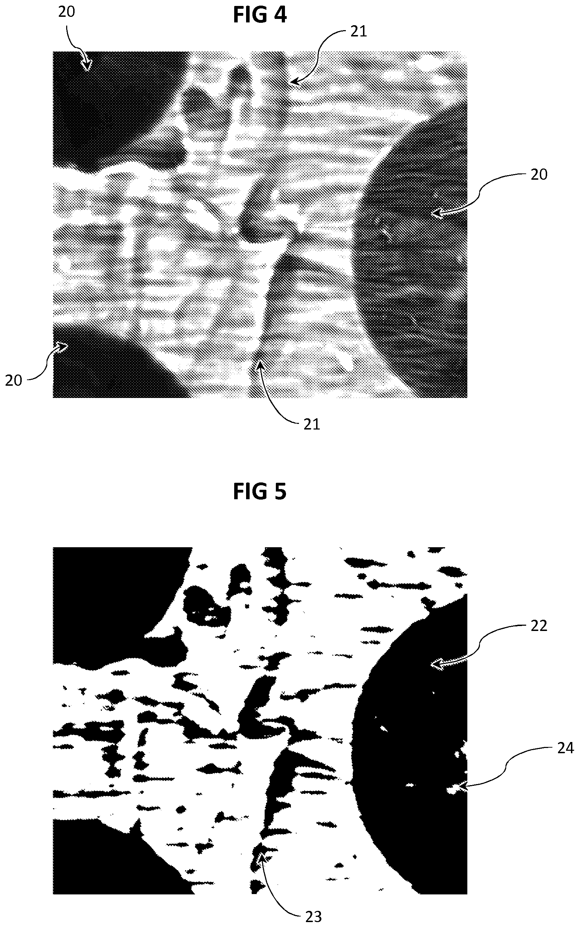

La **figure 4** montre un exemple d'une image holographique ainsi acquise, en l'occurrence une image reconstruite à partir d'un hologramme. Il s'agit d'une image de 2400 × 2500 pixels couvrant un champ de vue 11 s'étendant sur approximativement 1,5 mm² avec une profondeur de champ d'environ 200 µm. Les niveaux de gris sont codés sur 8 bits (256 niveaux de gris), 0 étant le noir et 255 le blanc. L'échantillon biologique est ici constitué par une solution saline de *Pseudomonas aeruginosa* en tant qu'agents biologiques. Sur cette image d'un échantillon biologique apparaissent des artefacts qui couvrent une partie importante du champ de vue 11. On distingue tout d'abord des bulles d'air 20 qui apparaissent en noir sur l'image. En raison de la différence entre l'indice de réfraction de l'air à l'intérieur de la bulle et l'indice de réfraction de la solution saline et de la forme arrondie de l'interface entre l'air et l'eau formant la paroi de la bulle, une partie des rayons lumineux incidents est réfléchie, et une autre partie des rayons est diffusée, de sorte que seuls les rayons lumineux incidents au centre de la bulle et parallèles à l'axe optique 16 peuvent traverser la bulle et atteindre le capteur d'image 12. Les bulles d'air 20, en l'absence d'intensité lumineuse, apparaissent donc essentiellement comme des formes noires, avec toutefois quelques traces lumineuses. On distingue également sur l'image des traces sombres 21 causées par la non-planéité des films transparents fermant le réceptacle d'analyse 2 afin de former les deux faces transparentes opposées. Il peut par exemple s'agir de reliefs tels que des pliures. Des artefacts tels que les bulles d'air 20 ou ces traces sombres 21 apparaissent dans l'image holographique bien que n'étant pas les agents biologiques à imager. Il convient donc de s'affranchir de ces artefacts pour procéder correctement à l'analyse de l'échantillon biologique au moyen de l'image holographique.

A cet effet, une fois cette image holographique acquise, un masque d'image est déterminé (étape S03) à partir de l'image holographique. Le masque d'image associe un état actif ou inactif à chaque pixel de l'image holographique. Le masque d'image comprend donc autant de pixels que l'image holographique. L'état, actif ou inactif, d'un pixel de l'image holographique est déterminé en fonction des valeurs d'intensité des pixels de l'image holographique. Le masque d'image est déterminé de sorte qu'un état inactif soit associé à des pixels de l'image holographique correspondant à des artefacts causés par des éléments présents dans le champ de vue autres que des agents biologiques.

Dans la mesure où les artefacts dans l'image holographique se présentent souvent sous la forme d'ensembles connexes de pixels présentant des valeurs d'intensité dans une plage de masquage constituant un sous-ensemble de la plage d'intensité, l'état inactif est associé au moins à des pixels d'un ensemble de pixels adjacents présentant des valeurs d'intensité dans cette plage de masquage. Cette plage de masquage est délimitée par au moins un seuil de masquage, et de préférence avec par seuils de masquage : un seuil de masquage bas et un seuil de masque haut, supérieur au seuil de masquage bas.

Par exemple, le seuil de masquage bas correspond à une valeur comprise entre 5% et 25% de l'étendue de la plage d'intensité, et de préférence entre 10% et 20% de l'étendue de la plage d'intensité. La plage d'intensité s'étend entre la valeur minimale d'intensité et la valeur maximale d'intensité. En reprenant l'exemple des niveaux de gris codés sur 8 bits (donc sur une plage 0-255), le seuil de masquage bas est par exemple entre 13 et 64, et de préférence entre 25 et 50. Le seuil de masquage haut correspond à une valeur comprise entre 75% et 95% de l'étendue de la plage d'intensité, et de préférence entre 80% et 90% de l'étendue de la plage d'intensité. En reprenant l'exemple des niveaux de gris codés sur 8 bits (donc sur une plage 0-255), le seuil de masquage haut est par exemple entre 191 et 243, et de préférence entre 204 et 230. De préférence, le seuil de masquage bas et le seuil de masquage haut sont séparés par au moins 60% de l'étendue de la plage d'intensité, de préférence par au moins 70%, et de préférence par au moins 80% de l'étendue de la plage d'intensité.

La détermination du masque d'image peut par exemple comprendre une succession d'opérations non linéaires telle qu'un seuillage ou l'application d'une morphologie mathématique. Ainsi, l'état d'un pixel du masque peut être déterminé par la valeur d'intensité dudit pixel par rapport à au moins un seuil de masquage. Par exemple, lors de la génération du masque d'image, en fonction du résultat de la comparaison entre chaque valeur d'intensité de chaque pixel de l'image holographique avec au moins un seuil de masquage, soit une première valeur de masque traduisant l'état inactif d'un pixel est associée audit pixel, ou une seconde valeur de masque traduisant l'état actif dudit pixel est associée audit pixel. Le masque d'image associe l'état inactif aux pixels présentant des valeurs d'intensité dans la plage de masquage, typiquement proches d'au moins une extrémité de la plage d'intensité, la proximité avec une extrémité de la plage d'intensité étant définie par le seuil de masquage. Ainsi, si la valeur d'intensité d'un pixel est en-dessous du seuil de masquage bas, un état inactif est associé audit pixel. De même, si la valeur d'intensité d'un pixel est au-dessus du seuil de masquage haut, un état inactif est associé audit pixel. A l'inverse, un état actif est associé à un pixel dont la valeur d'intensité est comprise en-dehors de la plage de masquage, c'est-à-dire entre le seuil de masquage bas et le seuil de masquage haut, ou simplement au-dessus du seuil de masquage bas si seul celui-ci est utilisé, ou simplement au-dessous du seuil de masquage haut si seul celui-ci est utilisé pour définir la plage de masquage.

Le masque d'image, associant soit un état actif soit un état inactif à chaque pixel, peut donc être interprété comme définissant une image binaire. La **figure 5** montre un exemple de représentation graphique du masque d'image déterminé à partir de l'image holographique de la figure 4, et dans laquelle les pixels à l'état inactif sont représentés en noir, et les pixels à l'état inactif sont représentés en blanc. Dans cet exemple, le masque d'image a été généré en utilisant un seul seuil de masquage bas à 40, soit à environ 15,7 % de l'étendue 0-255 des valeurs de niveaux de gris. Les pixels ayant des valeurs de niveaux de gris inférieures ou égales à 40 ont été associés à un état inactif, en noir dans l'image du masque d'image, et les pixels ayant des valeurs de niveaux de gris supérieures à 40 ont été associés à un état actif, en blanc dans l'image du masque d'image.

On retrouve en noir sur le masque d'image les formes arrondies 22 des bulles d'air ainsi que des traces noires 23 correspondant aux traces sombres 21 de l'image holographique de la figure 4. Toutefois, on constate aussi des traces blanches 24 à l'intérieur des formes arrondies 22 des bulles d'air, qui peuvent avoir été causées par des irrégularités du chemin optique des rayons lumineux, par exemple causés par des plissures, ou encore correspondant aux rayons qui ont pu traverser la bulle d'air. En outre, les traces noires 23 peuvent présenter des discontinuités résultant de la non prise en compte de certains pixels affectés par les traces sombres 21 dans le masque d'image, conséquence inhérente à l'utilisation d'un seuil de masquage.

Il est possible que la détermination du masque d'image comprenne la mise en oeuvre d'une morphologie mathématique, en particulier après une comparaison avec au moins un seuil de masquage comme décrit ci-dessus. Les opérations de morphologie mathématique peuvent notamment viser à modifier localement les formes des ensembles connexes de pixels pour les régulariser. Par exemple, afin d'améliorer la continuité des artefacts dans le masque d'image, il est de préférence appliqué au masque d'image une dilatation morphologique, suivie d'une érosion morphologique, c'est-à-dire l'application d'une fermeture morphologique. La taille de l'élément structurant utilisé dans ces opérations morphologiques dépend du niveau de fermeture morphologique qu'il est souhaité obtenir, ainsi que des caractéristiques du masque d'image. Par exemple, un seuil de masquage bas avec une valeur élevée nécessitera une opération de fermeture morphologique moins prononcée qu'avec une valeur basse.

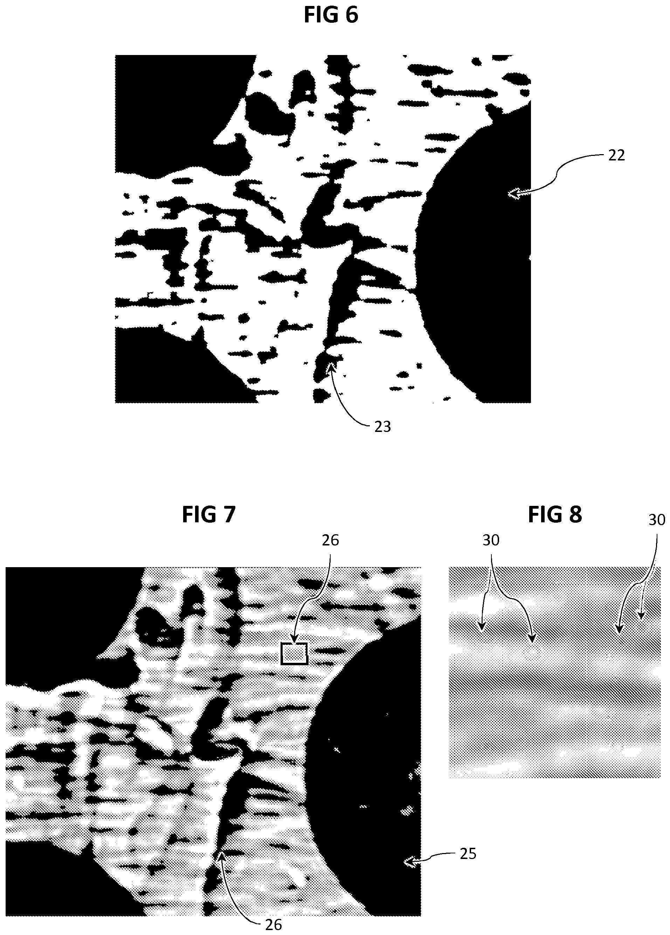

La **figure 6** montre le masque d'image résultant de l'application d'une dilatation morphologique, suivie d'une érosion morphologique, avec un élément structurant représenté par une fenêtre de taille. On constate que les traces blanches 24 à l'intérieur des formes arrondies 22 des bulles d'air. En effet, la fermeture morphologique cause le remplissage en noir des traces blanches de faible étendue qui sont isolées dans une forme noire. En outre, les traces noires 23 sont un peu plus régulières.

La détermination du masque d'image peut prendre en compte des critères de taille ou de forme d'ensembles connexes de pixels présentant des valeurs d'intensité dans la plage de masquage pour affecter un état actif ou inactif aux pixels desdits ensembles de pixels, et/ou des critères de taille ou de forme d'ensembles connexes de pixels présentant des états actifs ou inactifs similaires pour modifier un état actif ou inactif aux pixels desdits ensembles de pixels. Par exemple, en complément de la comparaison avec un seuil de masquage et/ou l'application d'une morphologie mathématique, il est possible de requérir, pour associer un pixel à l'état inactif, que ce pixel fasse partie d'un ensemble connexe de pixels présentant des valeurs d'intensité dans la plage de masquage, qui représente une certaine superficie. Par exemple, des artefacts tels que ceux des bulles d'air 20 sont représentés par des formes étendues et connexes, qui plus est de forme régulière arrondie. En imposant une taille minimale pour les ensembles connexes de pixels à passer à l'état inactif ou un critère de régularité de forme, on peut par exemple sélectivement restreindre l'état inactif à aux pixels des bulles d'air 20.

Afin de déterminer le masque d'image, il est également possible d'utiliser un réseau de neurone préalablement configuré pour associer un état inactif à des pixels de l'image holographique correspondant à des artefacts causés par des éléments présents dans le champ de vue autres que des agents biologiques. Plus précisément, le réseau de neurone est préalablement entraîné sur une base de données d'apprentissage formée de couples d'images holographiques et de masques d'image correspondant, les masques d'image étant par exemple déterminés comme expliqués ci-dessus, ou par une autre manière pour qu'un état inactif soit associé à des pixels de l'image holographique correspondant à des artefacts causés par des éléments présents dans le champ de vue autres que des agents biologiques. Puis, en utilisation, le réseau de neurone reçoit en entrée l'image holographique pour laquelle il est souhaité déterminer le masque d'image, et fournit en sortie le masque d'image correspondant, qui associe un état inactif à des pixels de l'image holographique correspondant à des artefacts causés par des éléments présents dans le champ de vue autres que des agents biologiques. Comme rappelé plus haut, les artefacts dans l'image holographique se présentent souvent sous la forme d'ensembles connexes de pixels présentant des valeurs d'intensité dans la plage de masquage. Par conséquent, l'état inactif est également associé au moins à des pixels d'un ensemble connexe de pixels présentant des valeurs d'intensité dans une plage de masquage.

Une fois le masque d'image obtenu, le masque d'image est appliqué (étape S04) sur l'image holographique. Le masque est appliqué de sorte que les états actifs et inactifs des pixels du masque d'image sont utilisés pour restreindre les traitements ultérieurs mis en oeuvre sur l'image holographique : seuls les pixels de l'image holographique correspondant à un état actif dans le masque d'image sont ensuite utilisés, d'où les désignations actif et inactif pour les états d'un pixel. Par exemple, les pixels de l'image holographique correspondant à un état inactif dans le masque d'image peuvent être retirés de l'image holographique : les coordonnées de ces pixels retirés sont alors non attribuées. D'autres façon d'appliquer le masque d'image peuvent être envisagées, dès lors que de cette application résulte la non-prise en compte des pixels de l'image holographique correspondant à un état inactif dans le masque d'image.

Le procédé comprend ensuite une détermination (étape S05) d'une valeur d'au moins un paramètre de biomasse représentatif de la répartition spatiale quantitative d'agents biologiques dans le champ de vue 11, à partir des seuls pixels de l'image holographique présentant un état actif défini par le masque d'image. Les pixels à l'état inactif ne sont pas pris en compte pour déterminer la valeur du paramètre de biomasse. Il faut donc conserver suffisamment de pixels à l'état actif pour permettre la mise en oeuvre du procédé. Par conséquent, le masque d'image associe de préférence un état actif à au moins 25% des pixels de l'image holographique, et de préférence à au moins 35% des pixels de l'image holographique. Un seuil d'activité correspondant à un nombre minimal de pixels à l'état actif, ou à un nombre maximal de pixels à l'état inactif, peut être établi. Si le masque d'image ne respecte pas ce seuil d'activité, par exemple avec trop peu de pixels à l'état actif, plusieurs solutions sont possibles.

Le fait que le seuil ne soit pas respecté peut signifier que l'image holographique est composée essentiellement d'artefacts, et ne permet donc pas une analyse fiable de l'échantillon biologique. Il est alors possible de déclencher l'émission d'une alerte de non-conformité à l'attention de l'opérateur. L'alerte de non-conformité de l'échantillon biologique peut revêtir plusieurs formes. Par exemple, l'instrument d'analyse peut comprendre un transducteur électroacoustique, et l'émission de l'alerte de non-conformité comprend l'émission de sons à destination d'un opérateur pour l'avertir de la non-conformité. De même, l'émission de l'alerte de non-conformité peut comprendre l'émission d'un signal lumineux à destination de l'opérateur. L'instrument d'analyse comprend typiquement une interface homme-machine dotée d'un écran d'affichage, et l'émission de l'alerte de non-conformité peut comprendre l'affichage sur l'écran d'un message prévenant un opérateur de la non-conformité de l'échantillon biologique. Une telle alerte, en particulier lorsqu'elle intervient lors d'un instant de mesure au début de la duré de mesure, peut permettre d'alerter sur un problème empêchant une analyse correcte de l'échantillon biologique, comme par exemple un mauvais remplissage du réceptacle d'analyse 2, et peut permettre à l'opérateur de remplacer l'échantillon biologique sans attendre la fin de la durée de mesure pour détecter le problème, la durée de mesure pouvant s'étendre sur plusieurs heures d'incubation. L'alerte de non-conformité peut également prendre la forme d'une simple mention de la détection de la non-conformité, de préférence avec l'indication de l'instant de mesure, parmi les résultats d'analyse. En effet, il est courant que les bulles d'air croissent pendant la période de mesure, ou période d'incubation, et il peut être avantageux de connaître le moment où la croissance des bulles rend impossible d'obtenir des mesures fiables, à la fois pour ne pas prendre en compte les éventuelles mesures intervenant après, mais aussi pour pouvoir tout de même exploiter les mesures faites avant. D'autres types d'alertes peuvent être prévues. Le non-respect du seuil d'activité par le masque d'image peut aussi indiquer que le seuil de masquage utilisé n'est pas adapté. Il peut donc être envisagé de reprendre la génération d'un masque d'image avec des seuils de masquage modifiés.

Le paramètre de biomasse peut être de tout type permettant de rendre compte de la répartition spatiale quantitative d'agents biologiques dans le champ de vue 11. Notamment, la valeur du paramètre de biomasse peut être dérivée d'un nombre d'agents biologiques apparaissant dans les pixels actifs de l'image holographique. La **figure 7** est un exemple de résultat de l'application du masque d'image de la figure 6 sur l'image holographique de la figure 4. On y retrouve les formes arrondies noires 25 correspondant aux bulles d'air, sans les traces blanches 24, ainsi que les traces noires 26. Ces pixels sont considérés comme inactifs et ne sont pas pris en compte. Une région 26 de pixels actifs est encadrée, et son agrandissement est illustré par la **figure 8****.** Dans cette figure, nous pouvons constater la présence d'agents biologiques 30 dans cette région 26 de pixels actifs. Ceux-ci apparaissent de façon nette et distincte comme de petits cercles. Il est donc possible de détecter la présence de ces agents biologiques, et même de les quantifier. Le paramètre de biomasse est par exemple un nombre d'agents biologiques dans le champ de vue, ou par exemple une proportion de l'étendue de l'image holographique occupée par des agents biologiques. Il est par exemple possible de compter le nombre d'agents biologiques dans l'image holographique. Lorsque l'image holographique est un hologramme, les figures d'interférence apparaissent typiquement sous forme d'anneaux autour d'un agent biologique. Un anneau est une forme particulièrement aisée à identifier au moyen d'un algorithme de reconnaissance de forme, et il est donc possible d'analyser l'image holographique afin d'y recenser tous les anneaux y apparaissant, correspondant à autant d'agents biologiques.

Plutôt qu'un comptage du nombre d'agents biologique, qui peut être longue et gourmande en ressource pour un résultat peu fiable, la détermination de la valeur du paramètre de biomasse peut comprendre la détermination, pour chacune d'une pluralité de zones de pixels actifs de l'image holographique (typiquement plusieurs milliers de zones), de la présence ou non d'agents biologiques dans ladite zone de pixels actifs. Le paramètre de biomasse peut alors correspondre au nombre ou à la proportion de zones de pixels actifs dans lesquelles sont présents des agents biologiques, ou plus facilement correspondre à un nombre de zones où les agents biologiques sont absents, ce qui est plus facile à mettre en évidence. La taille de la zone est choisie suffisamment petite pour permettre d'isoler des agents biologiques sans toutefois couper nécessairement la représentation de ceux-ci. Par exemple, la zone peut être entre 5 et 20 fois plus grande que la taille typique des agents biologiques recherchés. Dans un exemple, chaque zone de pixels actifs s'étend sur 20×20 pixels. D'autres tailles peuvent cependant être choisies, par exemple en fonction de la taille des agents biologiques dont il faut détecter la présence, ou encore en fonction du degré de précision recherchée ou des moyens de traitement de données à disposition, et de la rapidité du traitement de données.

La détermination de la présence ou non d'un agent biologique dans une zone de l'image holographique peut par exemple être déterminée par comparaison du niveau de gris moyen (ou d'intensité lumineuse) dans une zone avec un seuil de niveau de gris. Il est également possible de procéder à une comparaison du motif de la zone avec une base de données de motifs de référence correspondants à une pluralité d'apparences d'agents biologiques, et d'identifier le motif de référence présentant la plus grande similarité avec le motif de zone. Les caractéristiques associées à ce motif de référence sont considérées comme étant celles du motif de zone, ce qui permet, outre de détecter la présence d'agents biologiques dans la zone, de déduire des caractéristiques supplémentaires, tel que la croissance individuelle des agents biologiques, en fonction des caractéristiques des apparences renseignées dans la base de données.

L'acquisition d'une image holographique et la détermination d'une valeur du paramètre de biomasse, de même que la détermination d'un masque d'image, forment un cycle de mesure. Le procédé comprend donc une pluralité de cycles de mesure constitués d'étapes (S02, S03, S04, S05) mises en oeuvre de manière répétée pour une pluralité d'instants de mesure d'une durée de mesure afin d'obtenir des résultats d'analyse. Ces cycles de mesure sont typiquement répétés selon une période allant de une minute à 30 minutes, en fonction de la rapidité de l'instrument d'analyse, du nombre d'échantillons biologiques traités en parallèle, et par exemple en fonction du nombre de réceptacles d'analyse 2 dans une carte d'analyse 1 ou encore en fonction de la vitesse des interactions entre les agents biologiques et les réactifs. La durée de mesure s'étend sur plusieurs heures, et typiquement plus de 10 heures, résultants en plusieurs dizaines voire plusieurs centaines d'instants de mesure. Le procédé comprend donc typiquement plus de 10 cycles, et de préférence plus de 20 cycles de mesure au cours de cette durée de mesure. Chaque cycle de mesure permet donc d'obtenir une valeur d'un paramètre de biomasse représentatif de la répartition spatiale quantitative d'agents biologiques dans le champ de vue.

Le procédé d'analyse comprend une étape finale de fourniture d'au moins une valeur du paramètre de biomasse parmi les résultats d'analyse. Typiquement, les résultats d'analyse comprennent l'organisation chronologique de valeurs du paramètre de biomasse, afin de permettre de suivre l'évolution temporelle de la répartition spatiale quantitative d'agents biologiques dans le champ de vue 11. De préférence, la fourniture de la valeur du paramètre de biomasse prend la forme d'une représentation graphique permettant sa communication à un opérateur, et son interprétation par celui-ci, comme par exemple une courbe, une image ou un tableau. La représentation graphique peut par exemple être affichée par un écran d'affichage, mise sous un format permettant son affichage, ou peut être transmise à une imprimante pour être imprimée.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention.

## Revendications

1. Procédé d'analyse d'un échantillon biologique au moyen d'un instrument d'analyse, l'échantillon biologique comprenant des agents biologiques et étant disposé dans un réceptacle d'analyse (2) dans un champ de vue (11) d'un système d'imagerie holographique (10), le procédé comprenant :
- une acquisition (S02) d'une image holographique de l'échantillon biologique à un instant de mesure, l'image holographique associant une valeur d'intensité pour chaque pixel de ladite image holographique, les valeurs d'intensité étant comprises dans une plage d'intensité s'étendant entre une valeur minimale d'intensité et une valeur maximale d'intensité, **caractérisé par**
- une détermination (S03) à partir de l'image holographique acquise, d'un masque d'image associant un état actif ou inactif à chaque pixel de l'image holographique en fonction des valeurs d'intensité des pixels de l'image holographique, de sorte qu'un état inactif soit associé à des pixels de l'image holographique correspondant à des artefacts causés par des éléments présents dans le champ de vue autres que des agents biologiques, le masque d'image étant déterminé de sorte que l'état inactif est associé au moins à des pixels d'un ensemble connexe de pixels présentant des valeurs d'intensité dans une plage de masquage constituant un sous-ensemble de la plage d'intensité, ladite plage de masquage étant délimitée par au moins un seuil de masquage, et la détermination du masque d'image comprend la comparaison de valeurs d'intensité des pixels de l'image holographique avec l'au moins un seuil de masquage et l'association à chaque pixel d'une première valeur de masque traduisant l'état inactif dudit pixel ou d'une seconde valeur de masque traduisant l'état actif dudit pixel en fonction du résultat de la comparaison,
- une détermination (S05) d'une valeur d'au moins un paramètre de biomasse représentatif de la répartition spatiale quantitative d'agents biologiques dans le champ de vue (11), à partir des seuls pixels de l'image holographique présentant un état actif défini par le masque d'image, et
- une fourniture (S06) de ladite valeur du paramètre de biomasse parmi les résultats d'analyse.

2. Procédé d'analyse selon la revendication précédente, dans lequel la plage de masquage est délimitée par au moins un seuil de masquage bas correspondant à une valeur comprise entre 5% et 25% de l'étendue de la plage d'intensité, et de préférence entre 10% et 20% de l'étendue de la plage d'intensité.

3. Procédé d'analyse selon l'une quelconque des revendications 1 à 2, dans lequel la plage de masquage est délimitée par au moins un seuil de masquage haut correspondant à une valeur comprise entre 75% et 95% de l'étendue de la plage d'intensité, et de préférence entre 80% et 90% de l'étendue de la plage d'intensité.

4. Procédé d'analyse selon l'une des revendications 1 à 3, dans lequel la détermination du masque d'image prend en compte des critères de taille ou de forme d'ensembles connexes de pixels présentant des valeurs d'intensité dans la plage de masquage pour affecter un état actif ou inactif aux pixels desdits ensembles de pixels et/ou prend en compte des critères de taille ou de forme d'ensembles connexes de pixels présentant des états actifs ou inactifs similaires pour modifier un état actif ou inactif aux pixels desdits ensembles de pixels.

5. Procédé d'analyse selon l'une des revendications précédentes, dans lequel la détermination du masque d'image comprend la mise en oeuvre d'une morphologie mathématique.

6. Procédé d'analyse selon l'une quelconque des revendications précédentes, dans lequel la détermination du masque d'image comprend l'utilisation d'un réseau de neurone préalablement configuré pour associer un état inactif à des pixels de l'image holographique correspondant à des artefacts causés par des éléments présents dans le champ de vue (11) autres que des agents biologiques.

7. Procédé d'analyse selon l'une quelconque des revendications précédentes, dans lequel la valeur du paramètre de biomasse est dérivé d'un nombre d'agents biologiques apparaissant dans les pixels actifs de l'image holographique.

8. Procédé d'analyse selon l'une quelconque des revendications précédentes dans lequel la détermination de la valeur du paramètre de biomasse comprend la détermination, pour chacune d'une pluralité de zones de pixels actifs de l'image holographique, de la présence ou non d'agents biologiques dans ladite zone de pixels actifs.

9. Procédé d'analyse selon la revendication précédente, dans lequel la présence ou non d'agents biologiques dans une zone de pixels actifs est déterminée en comparant une valeur de niveau de gris de la zone avec un seuil, ou en comparant un motif de la zone avec des motifs de référence d'une base de données.

10. Procédé d'analyse selon l'une quelconque des revendications précédentes, dans lequel le masque d'image associe un état actif à au moins 25% des pixels de l'image holographique, et de préférence à au moins 35% des pixels de l'image holographique.

11. Instrument d'analyse comprenant un système holographique (10) avec un champ de vue (11) configuré pour acquérir une image holographique et des moyens de traitement de données, l'instrument d'analyse étant configuré pour recevoir un échantillon biologique dans un réceptacle d'analyse (2) dans le champ de vue (11) du système holographique (10) et pour mettre en oeuvre les étapes du procédé d'analyse selon l'une quelconque des revendications précédentes.

## Patentansprüche

1. Verfahren zur Analyse einer biologischen Probe mittels eines Analyseinstruments, wobei die biologische Probe biologische Arbeitsstoffe enthält und in einem Analysebehälter (2) in einem Sichtfeld (11) eines holografischen Bildgebungssystems (10) angeordnet ist, wobei das Verfahren enthält:
- eine Erfassung (S02) eines holografischen Abbilds der biologischen Probe zu einem Messzeitpunkt, wobei das holografische Abbild einen Intensitätswert für jedes Pixel des holografischen Abbilds verknüpft, wobei die Intensitätswerte in einem Intensitätsbereich enthalten sind, der sich zwischen einem minimalen Intensitätswert und einem maximalen Intensitätswert erstreckt,
**gekennzeichnet durch**
- eine Bestimmung (S03), ausgehend vom erfassten holografischen Abbild, einer Bildmaske, die einen aktiven oder inaktiven Zustand mit jedem Pixel des holografischen Abbilds abhängig von den Intensitätswerten der Pixel des holografischen Abbilds verknüpft, derart, dass ein inaktiver Zustand mit Pixeln des holografischen Abbilds verknüpft ist, die Artefakten entsprechen, die von im Sichtfeld vorhandenen Elementen anders als biologische Arbeitsstoffe verursacht werden, wobei die Bildmaske so bestimmt wird, dass der inaktive Zustand mindestens mit Pixeln einer zusammenhängenden Einheit von Pixeln verknüpft wird, die Intensitätswerte in einem Maskierungsbereich aufweisen, der eine Untereinheit des Intensitätsbereichs bildet, wobei der Maskierungsbereich von mindestens einer Maskierungsschwelle begrenzt wird, und die Bestimmung der Bildmaske den Vergleich von Intensitätswerten der Pixel des holografischen Abbilds mit der mindestens einen Maskierungsschwelle und die Verknüpfung mit jedem Pixel eines ersten Maskenwerts, der den inaktiven Zustand des Pixels ausdrückt, oder eines zweiten Maskenwerts enthält, der den aktiven Zustand des Pixels ausdrückt, abhängig vom Ergebnis des Vergleichs,
- eine Bestimmung (S05) eines Werts mindestens eines Biomasseparameters, der für die quantitative räumliche Verteilung von biologischen Arbeitsstoffen im Sichtfeld (11) repräsentativ ist, ausgehend nur von den Pixeln des holografischen Abbilds, die einen von der Bildmaske definierten aktiven Zustand aufweisen, und
- eine Bereitstellung (S06) des Werts des Biomasseparameters unter den Analyseergebnissen.

2. Analyseverfahren nach dem vorhergehenden Anspruch, wobei der Maskierungsbereich von mindestens einer unteren Maskierungsschwelle begrenzt wird, die einem Wert zwischen 5% und 25% der Ausdehnung des Intensitätsbereichs und vorzugsweise zwischen 10% und 20% der Ausdehnung des Intensitätsbereichs entspricht.

3. Analyseverfahren nach einem der Ansprüche 1 bis 2, wobei der Maskierungsbereich von mindestens einer oberen Maskierungsschwelle begrenzt wird, die einem Wert zwischen 75% und 95% der Ausdehnung des Intensitätsbereichs und vorzugsweise zwischen 80% und 90% der Ausdehnung des Intensitätsbereichs entspricht.

4. Analyseverfahren nach einem der Ansprüche 1 bis 3, wobei die Bestimmung der Bildmaske Größen- oder Formkriterien von zusammenhängenden Einheiten von Pixeln berücksichtigt, die Intensitätswerte im Maskierungsbereich aufweisen, um den Pixeln der Einheiten von Pixeln einen aktiven oder inaktiven Zustand zuzuweisen, und/oder Größen- oder Formkriterien von zusammenhängenden Einheiten von Pixeln berücksichtigt, die ähnliche aktive oder inaktive Zustände aufweisen, um einen aktiven oder inaktiven Zustand an den Pixeln der Einheiten von Pixeln zu verändern.

5. Analyseverfahren nach einem der vorhergehenden Ansprüche, wobei die Bestimmung der Bildmaske die Anwendung einer mathematischen Morphologie enthält.

6. Analyseverfahren nach einem der vorhergehenden Ansprüche, wobei die Bestimmung der Bildmaske die Verwendung eines Neuronennetzes enthält, das vorher konfiguriert wird, um einen inaktiven Zustand mit Pixeln des holografischen Abbilds zu verknüpfen, die Artefakten entsprechen, die von im Sichtfeld (11) vorhandenen Elementen anders als biologische Arbeitsstoffe verursacht werden.

7. Analyseverfahren nach einem der vorhergehenden Ansprüche, wobei der Wert des Biomasseparameters von einer Anzahl biologischer Arbeitsstoffe abgeleitet wird, die in den aktiven Pixeln des holografischen Abbilds erscheinen.

8. Analyseverfahren nach einem der vorhergehenden Ansprüche, wobei die Bestimmung des Werts des Biomasseparameters die Bestimmung, für jede einer Vielzahl von Zonen aktiver Pixel des holografischen Abbilds, des Vorhandenseins oder nicht von biologischen Arbeitsstoffen in der Zone aktiver Pixel enthält.

9. Analyseverfahren nach dem vorhergehenden Anspruch, wobei das Vorhandensein oder nicht von biologischen Arbeitsstoffen in einer Zone aktiver Pixel durch Vergleich eines Graustufenwerts der Zone mit einer Schwelle oder durch Vergleich eines Musters der Zone mit Bezugsmustern einer Datenbank bestimmt wird.

10. Analyseverfahren nach einem der vorhergehenden Ansprüche, wobei die Bildmaske einen aktiven Zustand mit mindestens 25% der Pixel des holografischen Abbilds und vorzugsweise mit mindestens 35% der Pixel des holografischen Abbilds verknüpft.

11. Analyseinstrument, das ein holografisches System (10) mit einem Sichtfeld (11), das konfiguriert ist, ein holografisches Abbild zu erfassen, und Datenverarbeitungseinrichtungen enthält, wobei das Analyseinstrument konfiguriert ist, eine biologische Probe in einem Analysebehälter (2) im Sichtfeld (11) des holografischen Systems (10) zu empfangen und um die Schritte des Analyseverfahrens nach einem der vorhergehenden Ansprüche durchzuführen.

## Claims

1. A method for analyzing a biological sample by means of an analysis instrument, the biological sample comprising biological agents and being arranged in an analysis receptacle (2) in a field of view (11) of a holographic imaging system (10), the method comprising:
- acquiring (S02) a holographic image of the biological sample at an instant of measurement, the holographic image associating an intensity value with each pixel of said holographic image, the intensity values lying within a range of intensities extending between a minimum intensity value and a maximum intensity value,
**characterized in that**
- determining (S03), from the holographic image acquired, an image mask which associates an active or inactive state with each pixel of the holographic image in accordance with the intensity values of the pixels of the holographic image, so that an inactive state is associated with pixels of the holographic image which correspond to artefacts caused by elements present in the field of view other than biological agents, the image mask being determined so that the inactive state is associated with at least some pixels of a connected set of pixels having intensity values within a masking range forming a subset of the intensity range, said masking range being delimited by at least one masking threshold, the determination of the image mask comprising the comparison of intensity values of the pixels of the holographic image with the at least one masking threshold and the association with each pixel of a first mask value indicating the inactive state of said pixel or a second mask value indicating the active state of said pixel in accordance with the result of the comparison,
- determining (S05) a value of at least one biomass parameter representative of the quantitative spatial distribution of biological agents in the field of view (11), on the basis of only those pixels of the holographic image that exhibit an active state defined by the image mask, and
- supplying (S06) said value of the biomass parameter among the analysis results.

2. The method of analysis as claimed in the preceding claim, wherein the masking range is delimited by at least a lower masking threshold corresponding to a value of between 5% and 25% of the extent of the intensity range, and preferably between 10% and 20% of the extent of the intensity range.

3. The method of analysis as claimed in any of claims 1 and 2, wherein the masking range is delimited by at least an upper masking threshold corresponding to a value of between 75% and 95% of the extent of the intensity range, and preferably between 80% and 90% of the extent of the intensity range.

4. The method of analysis as claimed in any of claims 1 to 3, wherein the determination of the image mask takes into account criteria of the size or shape of connected sets of pixels having intensity values in the masking range, for the purpose of assigning an active or inactive state to the pixels of said sets of pixels, and/or takes into account criteria of size or shape of connected sets of pixels having similar active or inactive states, for the purpose of modifying an active or inactive state for the pixels of said sets of pixels.

5. The method of analysis as claimed in any of the preceding claims, wherein the determination of the image mask comprises the implementation of mathematical morphology.

6. The method of analysis as claimed in any of the preceding claims, wherein the determination of the image mask comprises the use of a neural network preconfigured for associating an inactive state with pixels of the holographic image corresponding to artefacts caused by elements present in the field of view (11) other than biological agents.

7. The method of analysis as claimed in any of the preceding claims, wherein the value of the biomass parameter is derived from a number of biological agents appearing in the active pixels of the holographic image.

8. The method of analysis as claimed in any of the preceding claims, wherein the determination of the value of the biomass parameter comprises the determination, for each of a plurality of areas of active pixels of the holographic image, of the presence or absence of biological agents in said area of active pixels.

9. The method of analysis as claimed in the preceding claim, wherein the presence or absence of biological agents in an area of active pixels is determined by comparing a gray level value of the area with a threshold, or by comparing a pattern of the area with reference patterns in a database.

10. The method of analysis as claimed in any of the preceding claims, wherein the image mask associates an active state with at least 25% of the pixels of the holographic image, and preferably with at least 35% of the pixels of the holographic image.

11. An analysis instrument comprising a holographic system (10), with a field of view (11) configured for acquiring a holographic image, and data processing means, the analysis instrument being configured for receiving a biological sample in an analysis receptacle (2) in the field of view (11) of the holographic system (10) and for implementing the steps of the method of analysis as claimed in any of the preceding claims.
